# EUROPEAN PATENT APPLICATION

(11) **EP 4 145 675 A1**
(43) Date of publication of application: **08.03.2023**
(21) Application number: 20957276.7
(22) Date of filing: 16.10.2020
(51) Int. Cl.: H02K 1/16

(54) **HAIRPIN MOTOR, POWER ASSEMBLY, AND VEHICLE**

(71) Applicant: Huawei Digital Power Technologies Co., Ltd., Shenzhen, Guangdong 518043 (CN)
(72) Inventor: WANG, Yu, Shenzhen, Guangdong 518129 (CN); CHEN, Jian, Shenzhen, Guangdong 518129 (CN); YIN, Linpeng, Shenzhen, Guangdong 518129 (CN); EERHEMU, Bayaer, Shenzhen, Guangdong 518129 (CN); WAN, Yongjian, Shenzhen, Guangdong 518129 (CN)
(74) Representative: MERH-IP Matias Erny Reichl Hoffmann Patentanwälte PartG mbB
(86) International application number: PCT/CN2020/121679
(87) International publication number: WO 2022/077498

(57) **Abstract**

Disclosed are a flat wire motor, a power assembly, and a vehicle. The flat wire motor includes a stator and a rotor. The stator includes a stator winding and a stator iron core. The stator winding includes a first phase winding, a second phase winding, and a third phase winding. Each phase winding includes at least one parallel branch. The parallel branches are arranged uniformly and symmetrically, and each parallel branch includes at least two parallel subbranches arranged uniformly and symmetrically. A plurality of grooves are provided in an inner wall of the stator iron core. The plurality of grooves are arranged around an axial direction of a central axis of the stator iron core, and extend along the axial direction of the central axis. Flat wire conductors of the parallel subbranches are stacked in the grooves. In this way, the uniformly and symmetrically distributed parallel branches together with the uniformly and symmetrically arranged parallel subbranches of each parallel branch implement potential balance on the foregoing three phase windings, inhibit or eliminate generation of a cross current of the motor, and alleviate a temperature rise phenomenon of the motor, thereby improving working efficiency of the motor.

## Description

### TECHNICAL FIELD

This application relates to the field of motor technologies, and in particular, to a flat wire motor, a power assembly, and a vehicle.

### BACKGROUND

In recent years, flat wire motors are widely applied to traffic vehicles such as new energy electric vehicles owing to their relatively high copper slot fill factor, relatively good heat dissipation performance, and relatively high power density, which facilitate a lightweight design of the new energy electric vehicles, and can improve space utilization and endurance mileage of the new energy electric vehicles.

In a conventional technology, a flat wire motor mainly adopts a wave winding structure or a lap winding structure, and alternating current loss of the motor can be effectively reduced by designing conductors of the foregoing winding structure into a plurality of layers. However, when the conductors in the foregoing winding structure are designed into a plurality of layers, it is usually difficult for three-phase branches of the winding structure to achieve relatively good potential balance. This easily causes generation of a cross current and exacerbates a temperature rise of the flat wire motor.

### SUMMARY

An objective of this application is to provide a flat wire motor, a power assembly, and a vehicle, to resolve a technical problem that when conductors in a winding structure of a flat wire motor in a conventional technology are designed into a plurality of layers, it is difficult for three-phase branches of the winding structure to implement relatively good potential balance, and generation of a cross current is easily caused, exacerbating a temperature rise of the flat wire motor.

To achieve the foregoing objective, this application uses the following technical solutions:
According to a first aspect, a flat wire motor is provided, including a stator and a rotor, where the stator includes a stator winding and a stator iron core;
the stator winding includes a first phase winding, a second phase winding, and a third phase winding, the first phase winding, the second phase winding, and the third phase winding each include at least one parallel branch, the parallel branches are arranged uniformly and symmetrically, and each parallel branch includes at least two parallel subbranches arranged uniformly and symmetrically;
a plurality of grooves are provided in an inner wall of the stator iron core, the plurality of grooves are arranged around an axial direction of a central axis of the stator iron core and extend along the axial direction of the central axis, and flat wire conductors of the parallel subbranches are stacked in the grooves; and
the rotor is disposed in a space enclosed by the inner wall of the stator iron core.

In the flat wire motor provided in this embodiment of this application, the stator winding of the stator of the flat wire motor includes the first phase winding, the second phase winding, and the third phase winding, and each phase winding includes one or more parallel branches. Because the parallel branches are arranged uniformly and symmetrically, relatively good potential balance can be implemented between the parallel branches, to inhibit generation of a cross current of the flat wire motor, and further eliminate copper alternating current loss caused by the cross current of the flat wire motor. Each parallel branch includes at least two parallel subbranches arranged uniformly and symmetrically, so that a current on the parallel branch is shunted, and a skin effect generated by the stator winding that uses a flat wire can be alleviated to better inhibit the copper alternating current loss. Then, the uniformly and symmetrically distributed parallel branches together with the uniformly and symmetrically arranged parallel subbranches of each parallel branch implement potential balance on the foregoing three phase windings, and inhibit or eliminate generation of a cross current of the flat wire motor. In this way, when the flat wire motor operates at a high power, has a relatively high current frequency, and generates a relatively obvious alternating current resistance effect, the uniformly and symmetrically distributed parallel branches together with the uniformly and symmetrically arranged parallel subbranches of each parallel branch implement potential balance on the foregoing three phase windings, inhibit the alternating current resistance effect of the flat wire motor, and reduce loss generated by alternating current resistance. On one hand, working efficiency during high-speed operation of the flat wire motor is improved. On the other aspect, the temperature rise of the flat wire motor is reduced and working efficiency of the flat wire motor is improved.

Optionally, wire-in directions of two adjacent parallel subbranches of a same parallel branch are opposite. In this way, wire-in distribution of the parallel subbranches is relatively regular, and a wire shape of each parallel subbranch is also simplified. This helps quickly insert the stator winding into the grooves, and reduce insertion difficulty of the stator winding.

Optionally, the flat wire conductors of the parallel subbranches of a same phase winding are stacked in a same groove. In this way, in-phase distribution is implemented between the flat wire conductors, to avoid a requirement of phase to phase insulation between the flat wire conductors.

Optionally, two adjacent layers of flat wire conductors of the parallel subbranches in a same groove closely attach to each other. Insulation does not need to be considered between two adjacent layers of parallel subbranches, and therefore close attachment can be implemented, so that the flat wire motor has a better copper slot fill factor.

Optionally, a busbar and a welding end are respectively provided on two opposite sides of the stator winding along the central axis of the stator iron core, and the busbar is a non-welding end.

Optionally, a combination of spans of the parallel subbranches of the first phase winding, the parallel subbranches of the second phase winding, and the parallel subbranches of the third phase winding on the busbar is A, B, B; or
a combination of spans of the parallel subbranches of the first phase winding, the parallel subbranches of the second phase winding, and the parallel subbranches of the third phase winding on the busbar is A, A, B; or
a combination of spans of the parallel subbranches of the first phase winding, the parallel subbranches of the second phase winding, and the parallel subbranches of the third phase winding on the busbar is A, B, A. The foregoing combination of spans implements a symmetry design with unequal turns of the busbar of the stator winding, and inhibits and reduces harmonic generation, so that the flat wire conductors are reduced while working efficiency of the flat wire motor is improved.

Optionally, the combination of spans of the parallel subbranches of the first phase winding, the parallel subbranches of the second phase winding, and the parallel subbranches of the third phase winding on the busbar is 7, 10, 10.

Optionally, the combination of spans of the parallel subbranches of the first phase winding, the parallel subbranches of the second phase winding, and the parallel subbranches of the third phase winding on the busbar is 8, 8, 11.

Optionally, spans of the parallel subbranches of the first phase winding, the parallel subbranches of the second phase winding, and the parallel subbranches of the third phase winding at the welding end are the same. This simplifies a wire shape of the welding end, so that positions of welding joints can be neat and unified, to reduce difficulty in welding the first phase winding, the second phase winding, and the third phase winding at the welding end.

Optionally, the spans of the parallel subbranches of the first phase winding, the parallel subbranches of the second phase winding, and the parallel subbranches of the third phase winding at the welding end are all 9.

Optionally, bending directions and bending angles of wire twistings formed by the parallel subbranches of the first phase winding, the parallel subbranches of the second phase winding, and the parallel subbranches of the third phase winding at the welding end are the same. The bending directions and the bending angles of the wire twistings formed by the parallel subbranches at the welding end are kept consistent. This further simplifies the wire shape of the welding end, and makes the positions of the welding joints neater and more unified, so that welding of each parallel branch at the welding end is easier.

According to a second aspect, a power assembly is provided, including a reducing gear, where the power assembly further includes the foregoing flat wire motor, and the flat wire motor is in transmission connection to the reducing gear.

Because the power assembly provided in this embodiment of this application includes the foregoing flat wire motor, and the foregoing flat wire motor can improve its working efficiency while reducing its temperature rise, an overall temperature rise of the power assembly is reduced and working efficiency of the power assembly is improved.

According to a third aspect, a vehicle is provided, including the foregoing power assembly.

An embodiment of this application provides a vehicle. Because the vehicle includes the foregoing power assembly, and the foregoing power assembly can improve its working efficiency while reducing its overall temperature rise, a battery life of the vehicle is prolonged.

### DESCRIPTION OF DRAWINGS

FIG. 1 is a schematic diagram of a structure of a flat wire motor according to an embodiment of this application;
FIG. 2 is a schematic diagram of a structure of a flat wire motor from another perspective according to an embodiment of this application;
FIG. 3 shows a local part of an unfolded view of a winding of a first parallel branch of a U phase of a flat wire motor according to an embodiment of this application;
FIG. 4 shows a local part of an unfolded view of a winding of a second parallel branch of a U phase of a flat wire motor according to an embodiment of this application;
FIG. 5 shows a local part of an unfolded view of a winding of a third parallel branch of a U phase of a flat wire motor according to an embodiment of this application;
FIG. 6 shows a local part of an unfolded view of a winding formed by combining three parallel branches of a U phase of a flat wire motor according to an embodiment of this application;
FIG. 7 shows a local part of an unfolded view of a winding formed by combining three parallel branches of a V phase of a flat wire motor according to an embodiment of this application;
FIG. 8 shows a local part of an unfolded view of a winding formed by combining three parallel branches of a W phase of a flat wire motor according to an embodiment of this application;
FIG. 9 shows a local part of an unfolded view of windings of a U phase, a V phase, and a W phase of a flat wire motor according to an embodiment of this application;
FIG. 10 is a schematic diagram showing coordination between a groove of a flat wire motor and each flat wire conductor according to an embodiment of this application; and
FIG. 11 is a circuit diagram of coil connections among a U phase, a V phase, and a W phase according to an embodiment of this application.

**Reference numerals in the figures:**

| | | |
|---|---|---|
| 10-Stator | 11-Stator winding | 12-Stator iron core |
| 13-Busbar | 14-Welding end | 15-Groove. |

### DESCRIPTION OF EMBODIMENTS

The following explains the proper nouns appearing in this application:
A stator is a stationary part in a motor and has a function of generating a rotating magnetic field.

A rotor is a rotating component in the motor, and has a function of implementing conversion between electric energy and mechanical energy.

A cross current of a motor is a short circuit current that exists between two adjacent conductors in the motor and that is caused by insulation aging, inter-turn short circuit, inter-layer breakdown, and other reasons inside the motor.

Copper alternating current loss includes basic copper loss and additional copper loss. The basic copper loss is loss caused on a wire resistor by a current flowing through the stator and the rotor. The additional copper loss is additional loss caused on the stator by a skin effect and a proximity effect of an alternating current and stray copper loss caused by a circulating current between strands of the stator.

A span, also referred to as a first pitch, is a distance spanned on an armature surface by two element sides of a same element in a motor winding, and is usually represented by a quantity of grooves provided in an iron core of the stator.

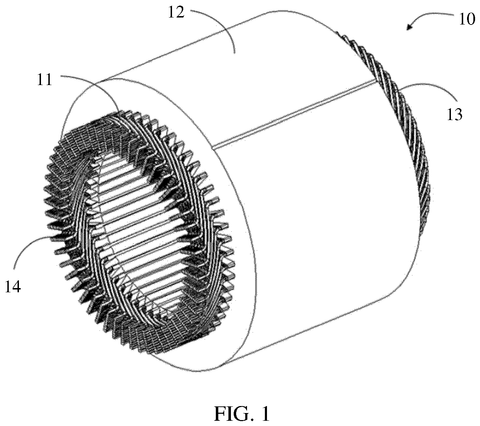

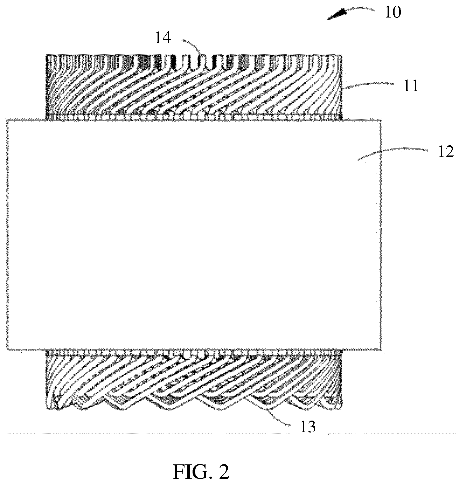

As shown in FIG. 1 and FIG. 2, an embodiment of this application provides a flat wire motor, a power assembly, and a vehicle. The flat wire motor includes a rotor and a stator 10. The stator 10 may specifically include a stator winding 11 and a stator iron core 12. In the flat wire motor, the rotor is disposed in a space enclosed by an inner wall of the stator iron core 12 of the stator 10. When the motor works, the stator winding 11 of the stator 10 of the motor is powered on and generates a rotating magnetic field, which acts on the rotor, so that the rotor rotates under an effect of an electromagnetic torque, and further converts electrical energy into mechanical energy for output. In this embodiment, the flat wire motor may be a permanent magnet synchronous motor.

Specifically, in the stator 10, the stator winding 11 includes a first phase winding, a second phase winding, and a third phase winding. The first phase winding, the second phase winding, and the third phase winding each include at least one parallel branch. The parallel branches are arranged uniformly and symmetrically. In this embodiment, symmetry of the parallel branches that are arranged uniformly and symmetrically means that quantities of parallel branches of the first phase winding, the second phase winding, and the third phase winding are the same, and distribution positions of the parallel branches of the first phase winding, the second phase winding, and the third phase winding are symmetrical about a central axis of the stator iron core 12. Uniformity of the parallel branches that are arranged uniformly and symmetrically means that the parallel branches are uniformly distributed on an inner circumference of the stator iron core 12. For the parallel branches, included angles formed by connecting lines between a center of the stator iron core 12 and two adjacent parallel branches are equal. In this way, the parallel branches arranged uniformly and symmetrically implement relatively good potential balance between the parallel branches, to further inhibit or eliminate a cross current generated in a high-speed operation process of the flat wire motor, thereby inhibiting additional copper loss of the flat wire motor.

More specifically, each parallel branch includes at least two parallel subbranches arranged uniformly and symmetrically. In this embodiment, an explanation for uniform and symmetrical arrangement of the parallel subbranches is the same as that for uniform and symmetrical distribution of the parallel branches in the foregoing description. The uniformly and symmetrically distributed parallel branches together with the uniformly and symmetrically arranged parallel subbranches of each parallel branch implement potential balance on the foregoing three phase windings, inhibit or eliminate generation of a cross current of the motor, inhibit and eliminate the additional copper loss caused by the skin effect and the proximity effect, and alleviate a temperature rise phenomenon of the flat wire motor, thereby improving working efficiency of the flat wire motor.

More specifically, a plurality of grooves 15 are provided in the inner wall of the stator iron core 12, the plurality of grooves 15 are arranged around an axial direction of the central axis of the stator iron core 12 and extend along the axial direction of the central axis, and flat wire conductors of the parallel subbranches are stacked in the grooves 15. The parallel subbranches are disposed and the flat wire conductors of the parallel subbranches are stacked in the grooves 15, so that a quantity of layers of the flat wire conductors disposed in the grooves 15 is increased, and a current flowing through each flat wire conductor is reduced, thereby better inhibiting the copper alternating current loss of the flat wire motor.

The following further describes the flat wire motor provided in this embodiment of this application. The stator winding 11 of the stator 10 of the flat wire motor provided in this embodiment of this application includes the first phase winding, the second phase winding, and the third phase winding, and each phase winding includes one or more parallel branches. Because the parallel branches are arranged uniformly and symmetrically, relatively good potential balance can be implemented between the parallel branches, to inhibit generation of a cross current of the flat wire motor, and further eliminate copper alternating current loss caused by the cross current of the flat wire motor. Each parallel branch includes at least two parallel subbranches arranged uniformly and symmetrically, so that a current on the parallel branch is shunted, and a skin effect generated by the stator winding 11 that uses a flat wire can be alleviated to better inhibit the copper alternating current loss. Then, the uniformly and symmetrically distributed parallel branches together with the uniformly and symmetrically arranged parallel subbranches of each parallel branch implement potential balance on the foregoing three phase windings, and inhibit or eliminate generation of a cross current of the flat wire motor. In this way, when the flat wire motor operates at a high power, has a relatively high current frequency, and generates a relatively obvious alternating current resistance effect, the uniformly and symmetrically distributed parallel branches together with the uniformly and symmetrically arranged parallel subbranches of each parallel branch implement potential balance on the foregoing three phase windings, inhibit the alternating current resistance effect of the flat wire motor, and reduce loss generated by alternating current resistance. On one hand, working efficiency during high-speed operation of the flat wire motor is improved. On the other aspect, the temperature rise of the flat wire motor is reduced and working efficiency of the flat wire motor is improved.

A power assembly provided in an embodiment of this application includes a reducing gear and the foregoing flat wire motor. The flat wire motor is in transmission connection to the reducing gear. Specifically, a drive shaft of the flat wire motor may be in transmission connection to an input shaft of the reducing gear by using a transmission member such as a coupling, to output drive power from the flat wire motor to the reducing gear.

Because the power assembly provided in this embodiment of this application includes the foregoing flat wire motor, and the foregoing flat wire motor can improve its working efficiency while reducing its temperature rise, an overall temperature rise of the power assembly is reduced and working efficiency of the power assembly is improved.

A vehicle provided in an embodiment of this application includes the foregoing power assembly. The foregoing power assembly is disposed in the vehicle, and provides operation power for the vehicle. Specifically, in this embodiment, the vehicle may be specifically a new energy vehicle driven by electrical energy. The new energy vehicle may be specifically a hybrid electric vehicle, a battery electric vehicle, a fuel cell electric vehicle, or the like, or may be a vehicle using a highly efficient energy storage device such as a supercapacitor, a flywheel battery, or a flywheel energy storage device as a source of electric energy.

Because the vehicle provided in this embodiment of this application includes the foregoing power assembly, and the foregoing power assembly can improve its working efficiency while reducing its overall temperature rise, a battery life of the vehicle is prolonged.

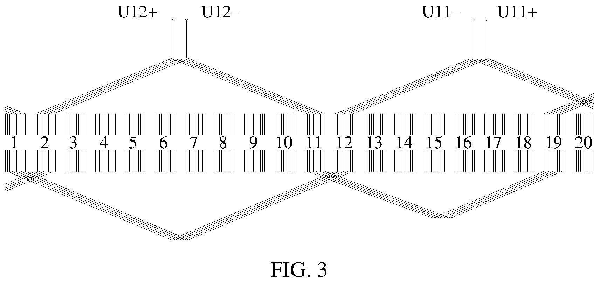

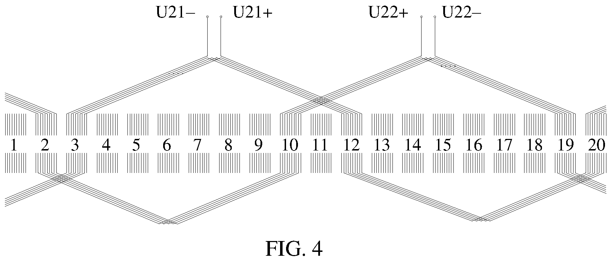

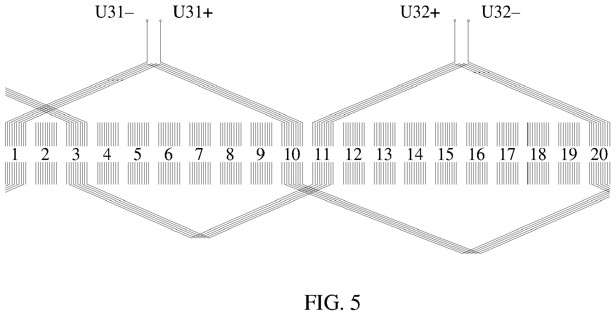

In some other embodiments of this application, as shown in FIG. 3 to FIG. 5, wire-in directions of two adjacent parallel subbranches of a same parallel branch are opposite. In addition, wire-out directions of the two adjacent parallel subbranches of the same parallel branch are also opposite. For example, the two adjacent parallel subbranches of the same parallel branch are defined as U11 and U12. When a wire-in end of U11 is on a first side of the stator winding 11 along the central axis of the stator winding 11, and a wire-out end of U11 is on a second side opposite to the first side of the stator winding 11 along the central axis of the stator winding 11, a wire-in end of U12 is on the second side of the stator winding 11 along the central axis of the stator winding 11, that is, opposite to the wire-in end direction of U11, and a wire-out end of U12 is on the first side of the stator winding 11 along the central axis of the stator winding 11, that is, opposite to the wire-out end direction of U11. In this way, wire-in and wire-out distribution of the parallel subbranches is relatively regular, and a wire shape of each parallel subbranch is also simplified. This helps quickly insert the stator winding 11 into the grooves 15, and reduce insertion difficulty of the stator winding 11.

In some other embodiments of this application, the flat wire conductors of the parallel subbranches of a same phase winding are stacked in the same groove 15. Specifically, the flat wire conductors of the parallel subbranches of a same phase winding are stacked in a same groove 15, so that in-phase distribution is implemented between the flat wire conductors, to avoid a requirement of phase to phase insulation between the flat wire conductors. In this way, on one hand, overall insulation costs of the flat wire motor can be reduced. On the other aspect, the flat wire conductors can occupy more space in the groove 15, thereby increasing a copper slot fill factor of the flat wire motor, and reducing insertion difficulty of the stator winding 11.

In some other embodiments of this application, two adjacent layers of flat wire conductors of the parallel subbranches in a same groove 15 closely attach to each other. Specifically, because two adjacent layers of parallel subbranches have a same phase in a same groove 15, insulation does not need to be considered between the two adjacent layers of parallel subbranches, and therefore close attachment can be implemented, so that the flat wire motor has a better copper slot fill factor.

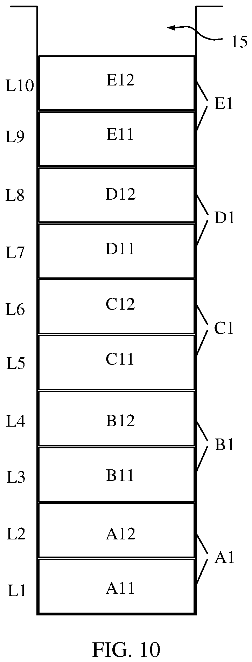

For example, as shown in FIG. 10, L1 to L10 are 10 layers in a groove 15, and A11 to E12 represent flat wire conductors that are of parallel subbranches and that are respectively located in corresponding layers. In this way, one flat wire conductor is equivalent to two small flat wire conductors obtained through subdivision. The small flat wire conductors are stacked in the layers L1 to L10, so that two small flat wire conductors belonging to a same large flat wire conductor are connected in parallel, and a current flowing through each flat wire conductor is reduced by half. In addition, the flat wire conductors can be arranged in more layers in the groove 15, so that the copper alternating current loss can be better inhibited, working efficiency of the flat wire conductor can be improved, and a temperature rise during high-speed operation of the flat wire conductor can be reduced. In addition, in the layers L1 to L10, the flat wire conductors closely attach to each other from A1 1 to E12, to maximize space utilization of the groove 15.

In some other embodiments of this application, as shown in FIG. 1 and FIG. 2, a busbar 13 and a welding end 14 are respectively provided on two opposite sides of the stator winding 11 along the central axis of the stator iron core 12, and the busbar 13 is a non-welding end. Specifically, the busbar 13 is designed as a non-welding end, and the two opposite sides of the stator winding 11 along the central axis of the stator iron core 12 are respectively made to be the busbar 13 and the welding end 14, so that positions of the busbar 13 and the welding end 14 are specified to clarify the position of the busbar 13, thereby facilitating wiring of the stator winding 11.

Optionally, the parallel subbranches form, on the busbar 13, a plurality of U-shaped or V-shaped wire ends that are arranged divergently around the central axis of the stator iron core 12, to facilitate wiring of wire-out ends and wire-in ends of the parallel subbranches, thereby reducing wiring difficulty of the stator winding 11.

In some other embodiments of this application, a combination of spans of the parallel subbranches of the first phase winding, the parallel subbranches of the second phase winding, and the parallel subbranches of the third phase winding on the busbar 13 is A, B, B; or
a combination of spans of the parallel subbranches of the first phase winding, the parallel subbranches of the second phase winding, and the parallel subbranches of the third phase winding on the busbar 13 is A, A, B; or
a combination of spans of the parallel subbranches of the first phase winding, the parallel subbranches of the second phase winding, and the parallel subbranches of the third phase winding on the busbar 13 is A, B, A.

Specifically, the foregoing combinations of spans indicate that spans of parallel subbranches of two windings among the first phase winding, the second phase winding, and the third phase winding are the same, and a span of the parallel subbranches of the remaining winding is different from the spans of the parallel subbranches of the other two windings.

A span of a parallel subbranch indicates a quantity of grooves between two grooves 15 into which two opposite conductor segments of the parallel subbranch are respectively embedded when the parallel subbranch is embedded into the grooves 15. For example, if two grooves 15 into which two opposite conductor segments of a parallel subbranch are respectively embedded are spaced apart by eight grooves 15, a span of the parallel subbranch is 8.

For example, the combination of spans of the parallel subbranches of the first phase winding, the parallel subbranches of the second phase winding, and the parallel subbranches of the third phase winding may be 7, 10, 10, or 8, 8, 11, or the like. Combinations of spans of the first phase winding, the second phase winding, and the third phase winding on the busbar 13 are limited to the foregoing three combinations, to implement a symmetry design with unequal turns of the busbar 13 of the stator winding 11, and inhibit and reduce harmonic generation, so that the flat wire conductors are reduced while working efficiency of the flat wire motor is improved.

In some other embodiments of this application, spans of the parallel subbranches of the first phase winding, the parallel subbranches of the second phase winding, and the parallel subbranches of the third phase winding at the welding end 14 are the same. Specifically, the spans of the parallel subbranches of the first phase winding, the parallel subbranches of the second phase winding, and the parallel subbranches of the third phase winding at the welding end 14 are made the same. This simplifies a wire shape of the welding end 14, so that positions of welding joints can be neat and unified to reduce difficulty in welding the first phase winding, the second phase winding, and the third phase winding at the welding end 14. For example, the spans of the parallel subbranches of the first phase winding, the parallel subbranches of the second phase winding, and the parallel subbranches of the third phase winding at the welding end 14 may all be 9.

In some other embodiments of this application, bending directions and bending angles of wire twistings formed by the parallel subbranches of the first phase winding, the parallel subbranches of the second phase winding, and the parallel subbranches of the third phase winding at the welding end 14 are the same. Specifically, the parallel subbranches of the first phase winding, the parallel subbranches of the second phase winding, and the parallel subbranches of the third phase winding form stubs at the welding end 14. To facilitate dense arrangement of the stubs, the stubs need to be bent to form wire twistings. The bending directions and the bending angles of the wire twistings formed by the parallel subbranches at the welding end 14 are kept consistent. This further simplifies the wire shape of the welding end 14, and makes the positions of the welding joints neater and more unified, so that welding of each parallel branch at the welding end 14 is easier.

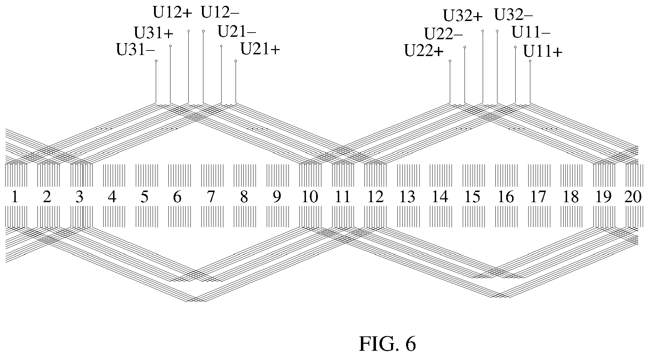

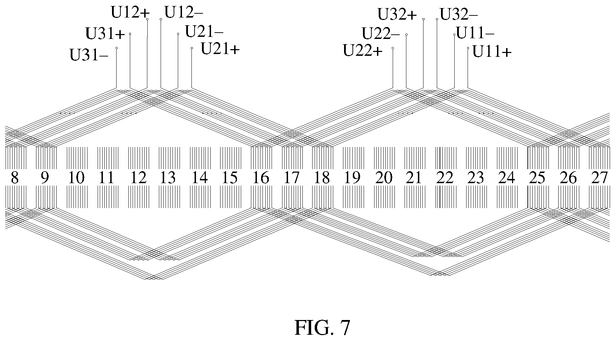

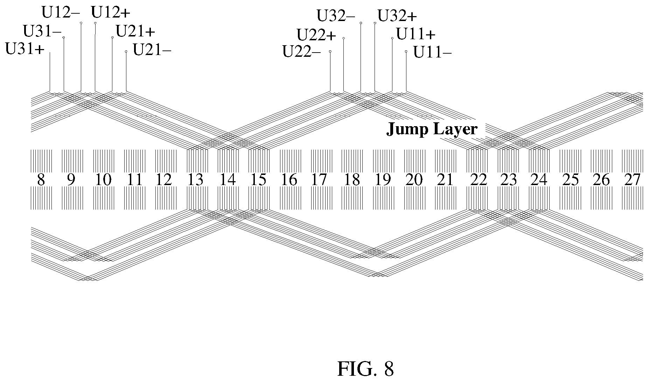

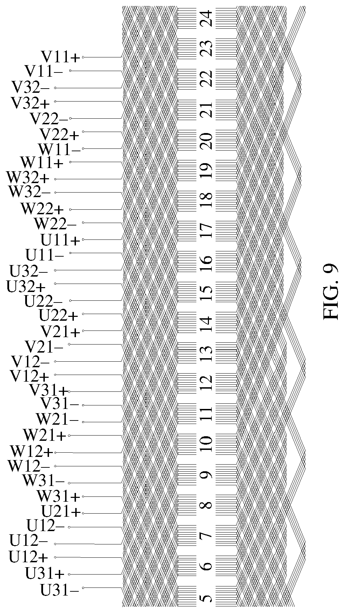

For example, the following describes working efficiency of the flat wire motor by using a flat wire motor with 54 grooves 15 as an example. There are 10 layers of parallel subbranches in each groove 15 of the flat wire motor. In FIG. 10, L1 represents a bottom layer of the groove 15, and correspondingly, L10 represents a top layer of the groove 15. As shown in FIG. 3 to FIG. 9, the first phase winding, the second phase winding, and the third phase winding are a U phase winding, a V phase winding, and a W phase winding of the flat wire motor. In addition, a combination of spans of parallel subbranches of the U phase winding, the V phase winding, and the W phase winding on the busbar 13 is 7, 10, 10, or 8, 8, 11. Spans of the U phase winding, the V phase winding, and the W phase winding at the welding end 14 are all 9. In this embodiment, quantities of parallel branches of the U phase winding, the V phase winding, and the W phase winding are all 3. In addition, bending directions and bending angles of wire twistings formed by the parallel subbranches of the U phase winding, the V phase winding, and the W phase winding at the welding end 14 are all also the same.

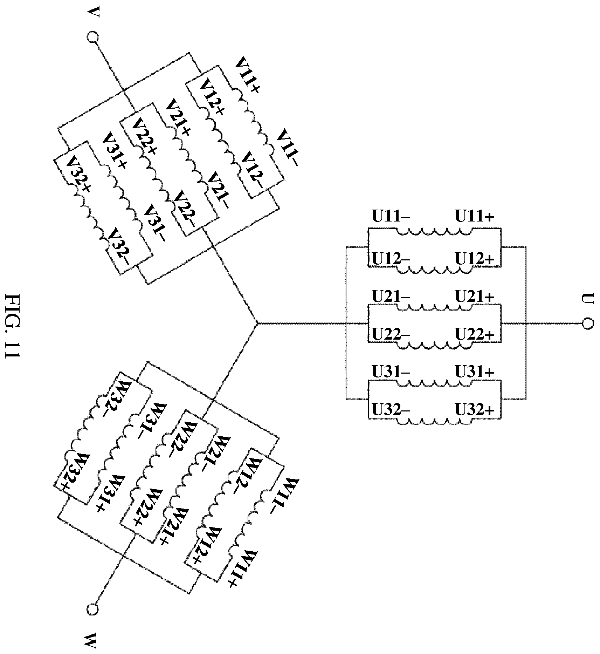

Using the U phase winding as an example, in FIG. 11, Uab+ represents a flat wire conductor of the U phase into which a current flows, and Uab- represents a flat wire conductor of the U phase out of which a current flows, "a" in Uab represents a sequence number of a parallel branch in the phase, and a may be an integer greater than or equal to 1. "b" represents a sequence number of a parallel subbranch in each parallel branch, and b is also an integer greater than or equal to 1. For example, U12 represents a second parallel subbranch in a first parallel branch in the U phase winding.

The following Table 1 to Table 21 are tables of arrangement of flat wire conductors in grooves 15 numbered 1 to 54 when the combination of spans of the parallel subbranches of the U phase winding, the V phase winding, and the W phase winding of the flat wire motor on the busbar 13 is 8, 8, 11.

Table 1 to Table 3 are tables of arrangement of flat wire conductors of the first parallel branch, a second parallel branch, and a third parallel branch of the U phase in the grooves 15 numbered 1 to 18.

Table 4 and Table 6 are tables of arrangement of flat wire conductors of the first parallel branch, the second parallel branch, and the third parallel branch of the U phase of the flat wire motor in the grooves 15 numbered 19 to 36.

Table 7 to Table 9 are tables of arrangement of flat wire conductors of the first parallel branch, the second parallel branch, and the third parallel branch of the U phase of the flat wire motor in the grooves 15 numbered 37 to 54.

Table 10 to Table 12 are tables of arrangement of flat wire conductors of first parallel branches, second parallel branches, and third parallel branches of the U phase, the V phase, and the W phase of the flat wire motor in the grooves 15 numbered 1 to 18.

Table 13 to Table 15 are tables of arrangement of flat wire conductors of first parallel branches, second parallel branches, and third parallel branches of the U phase, the V phase, and the W phase of the flat wire motor in the grooves 15 numbered 19 to 36.

Table 16 to Table 18 are tables of arrangement of flat wire conductors of first parallel branches, second parallel branches, and third parallel branches of the U phase, the V phase, and the W phase of the flat wire motor in the grooves 15 numbered 37 to 54.

Table 19 to Table 21 are tables of arrangement of flat wire conductors of parallel branches of the U phase, the V phase, and the W phase of the flat wire motor in the grooves 15 numbered 1 to 54.

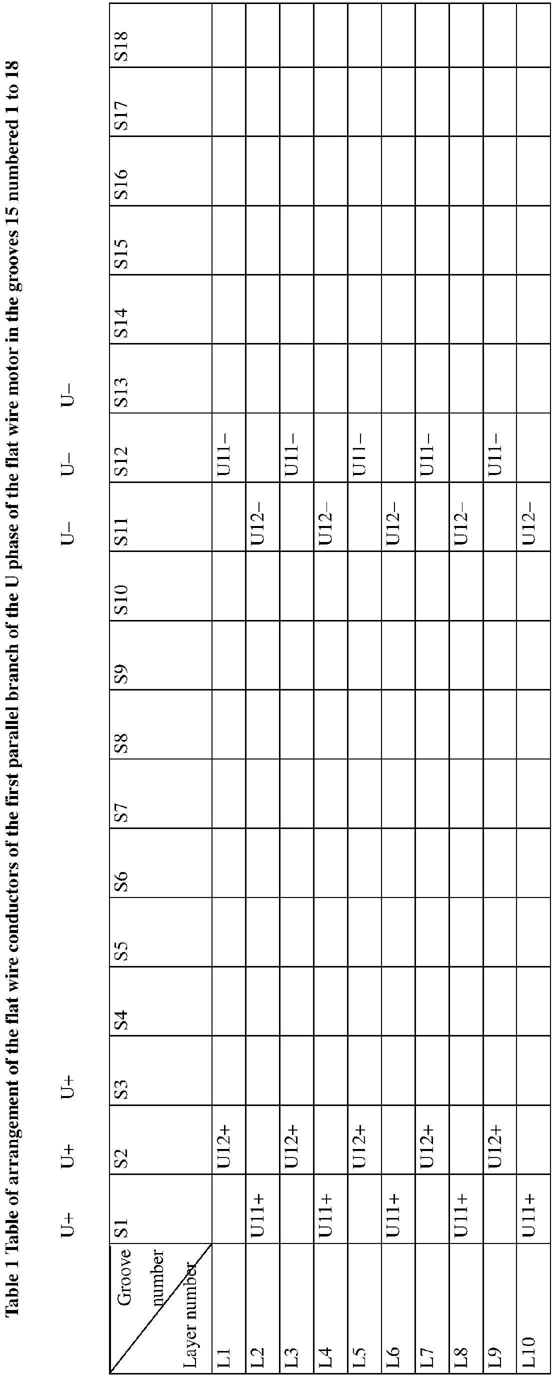

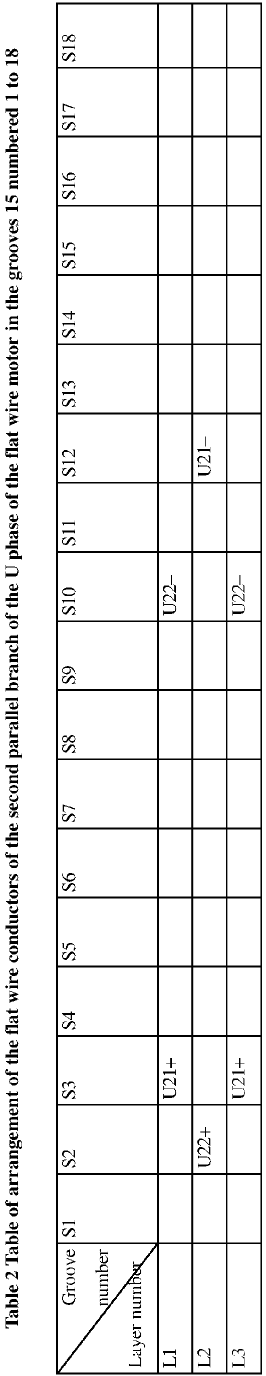

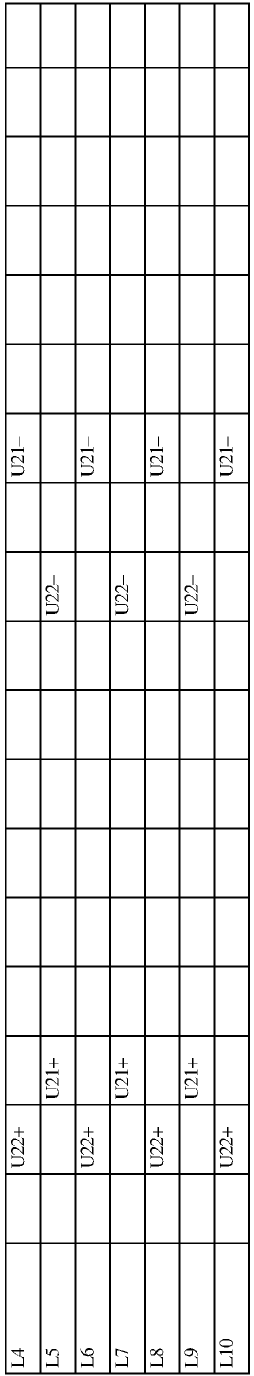

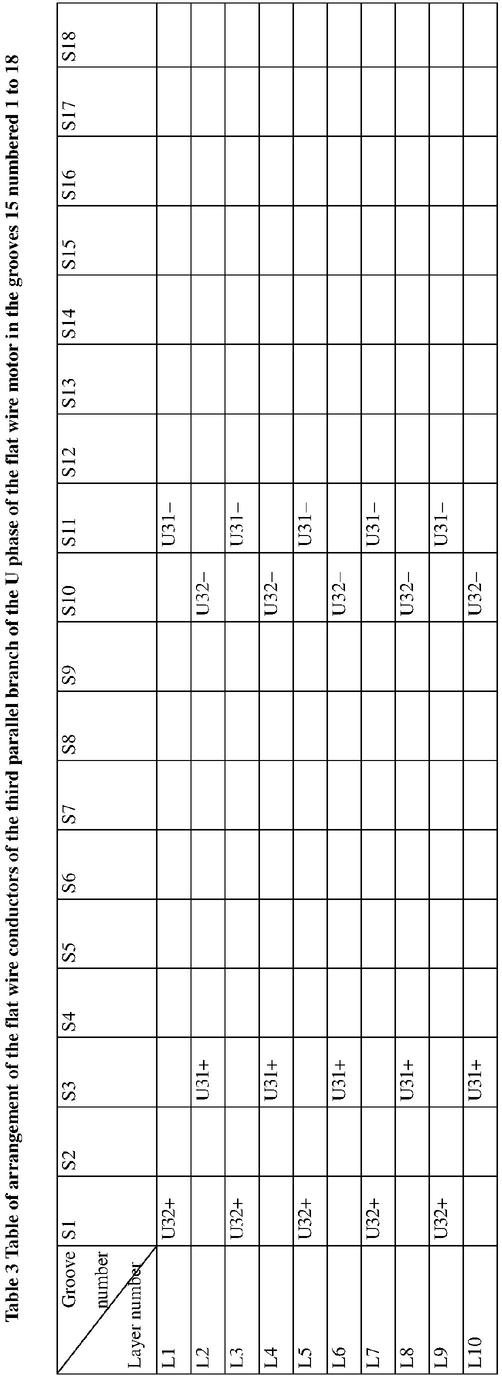

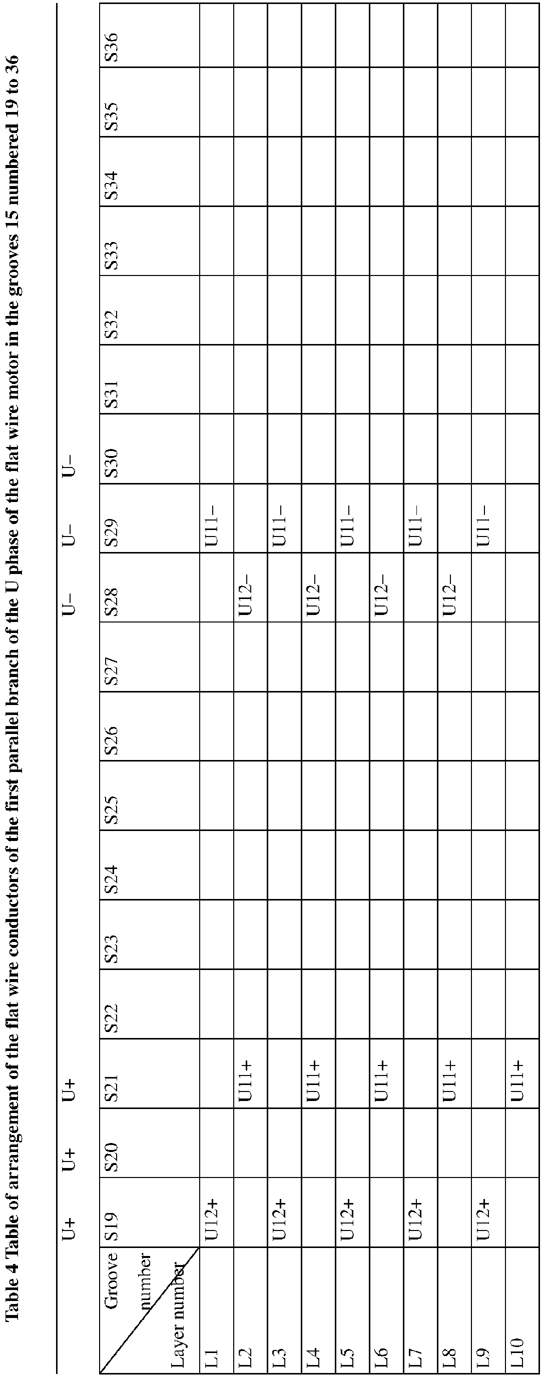

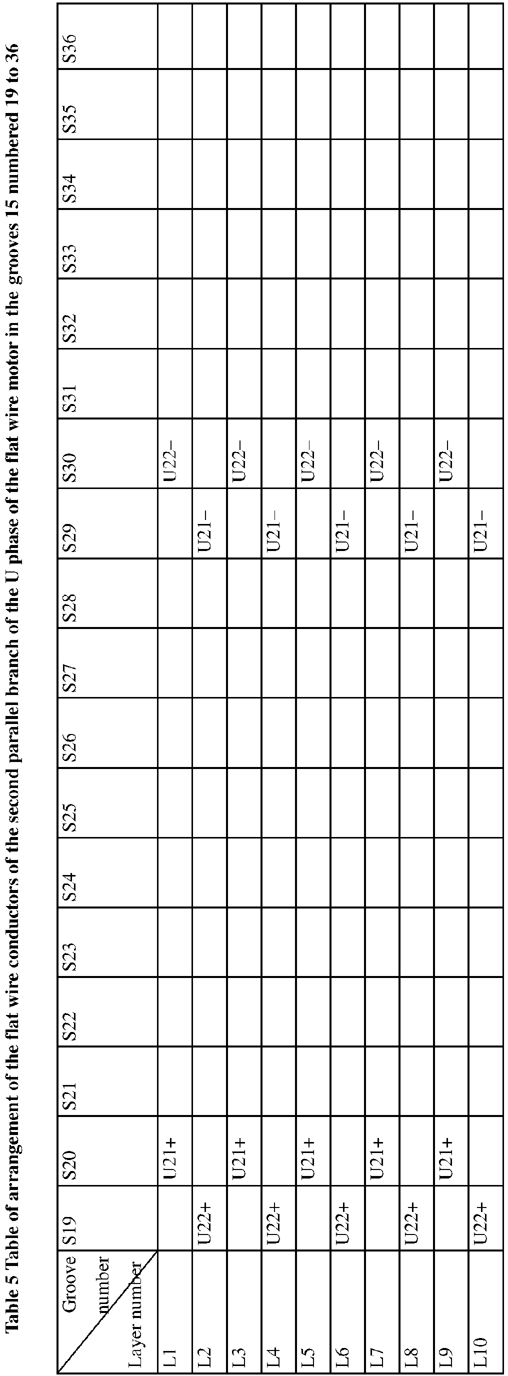

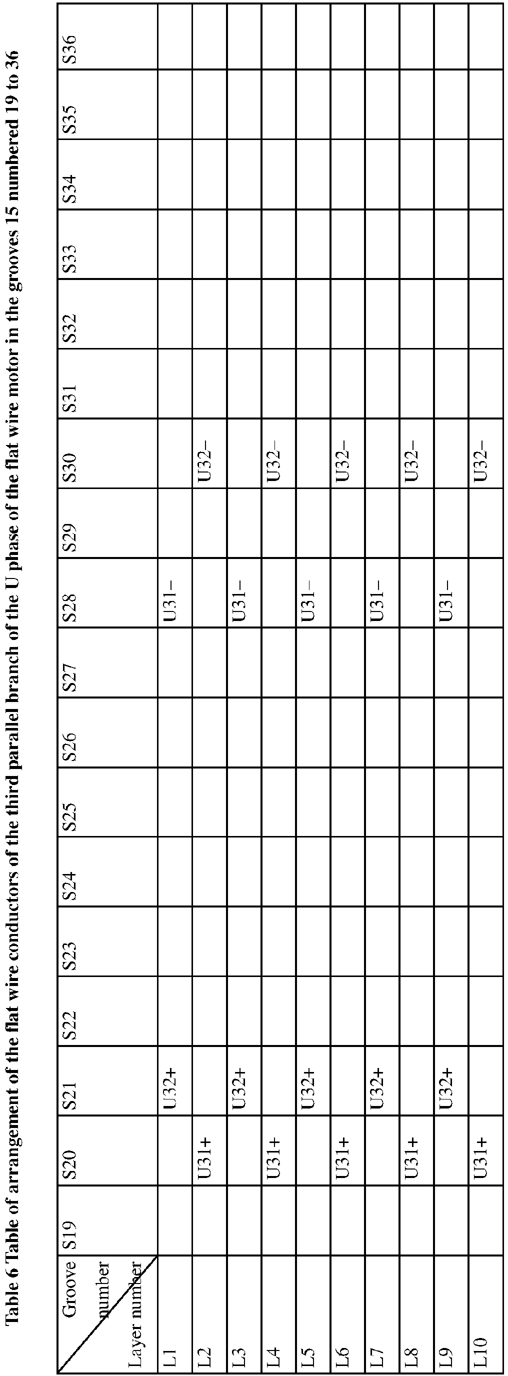

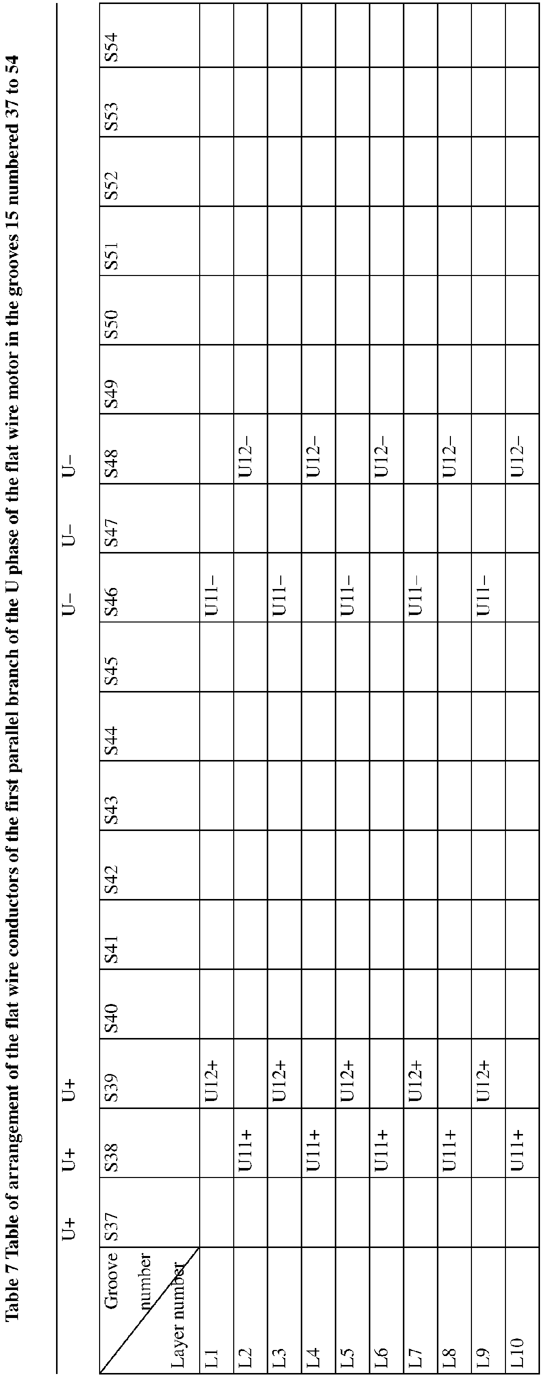

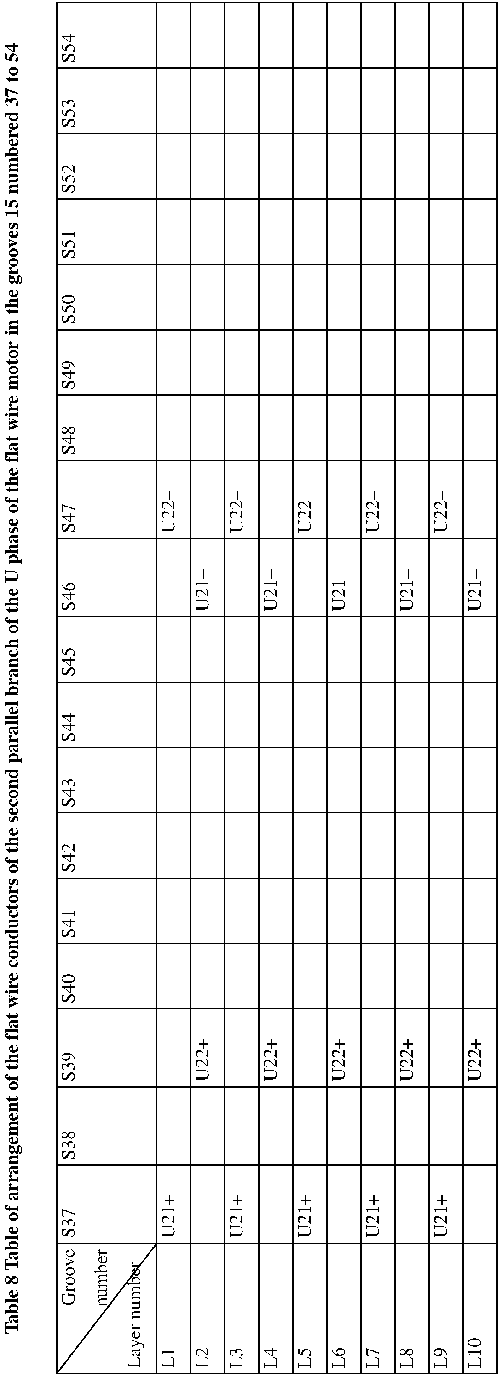

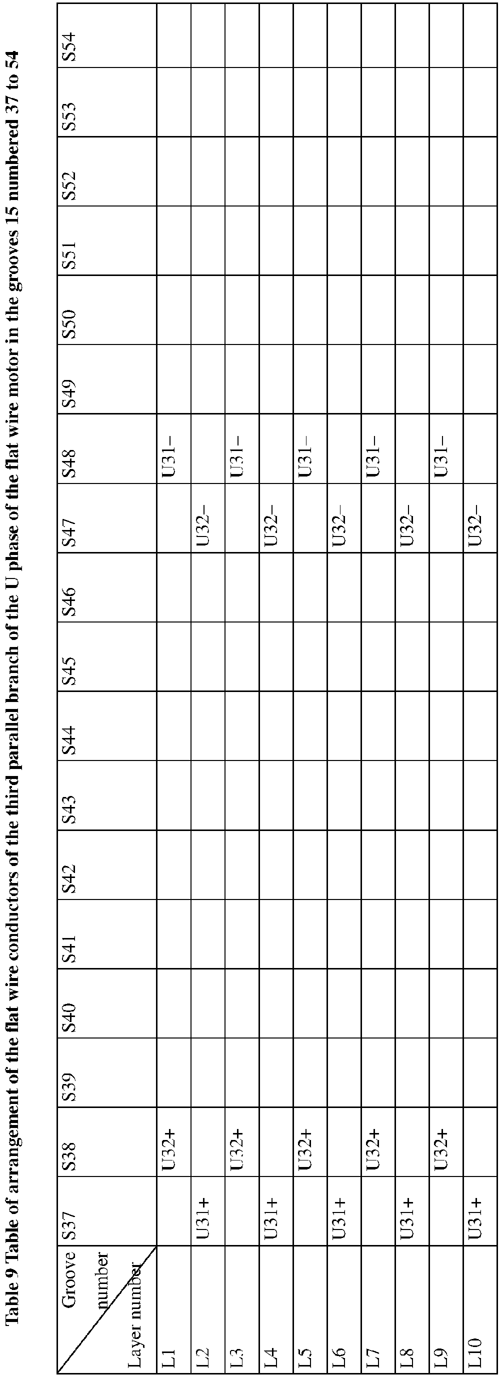

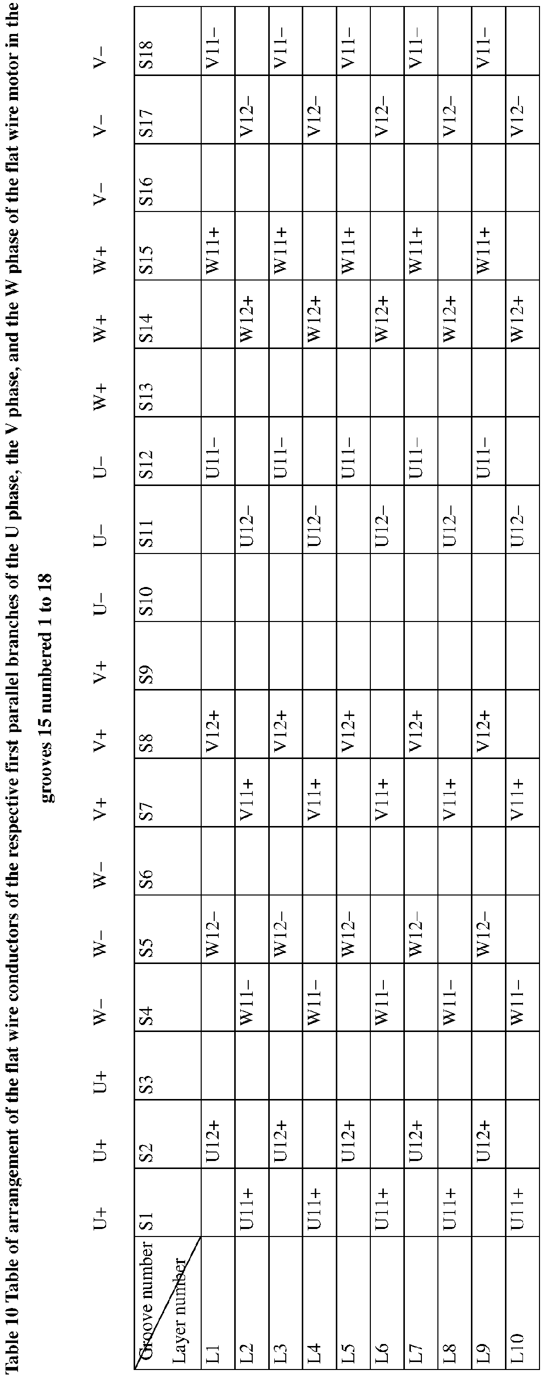

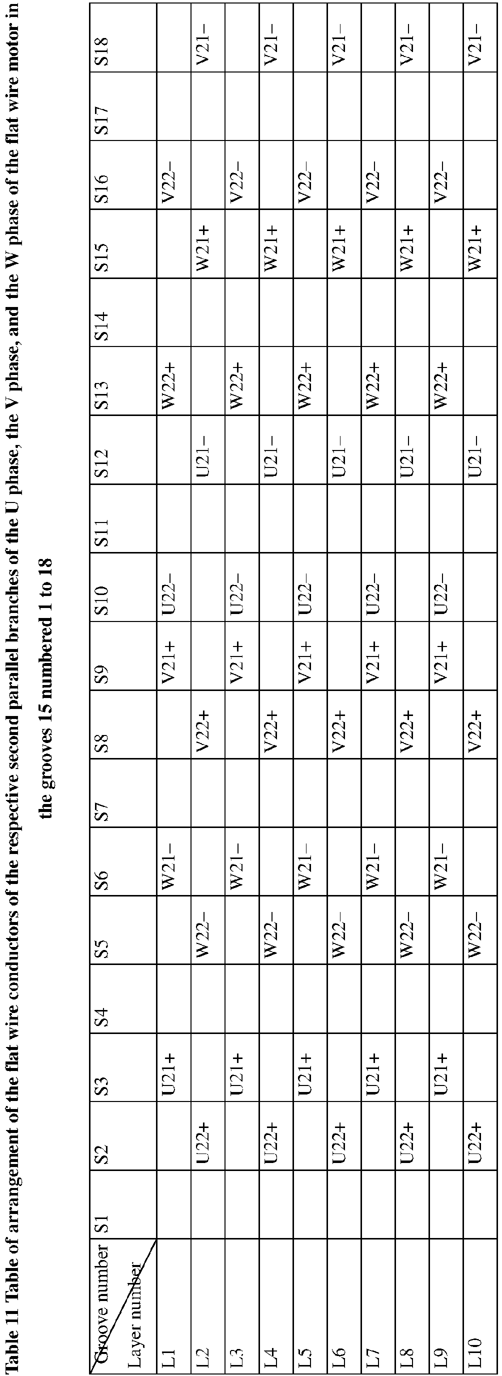

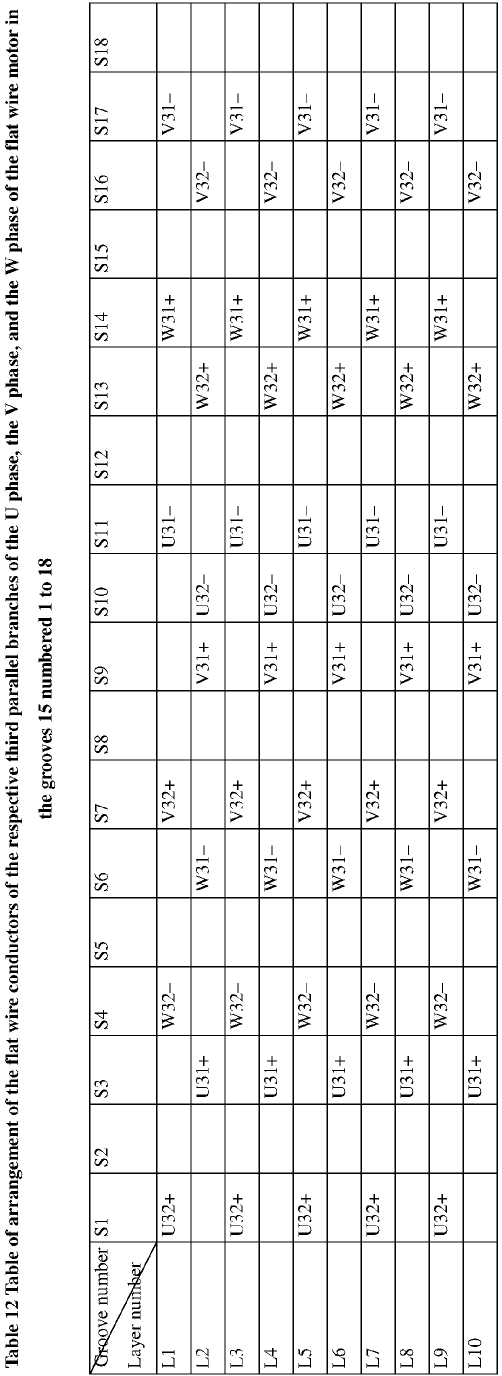

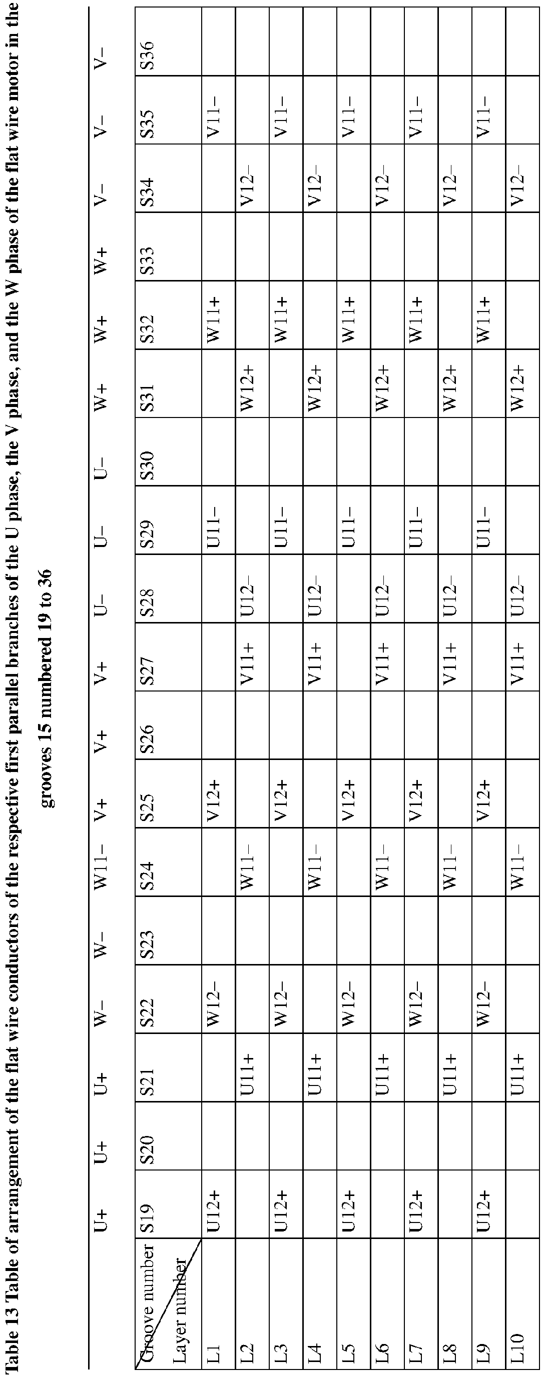

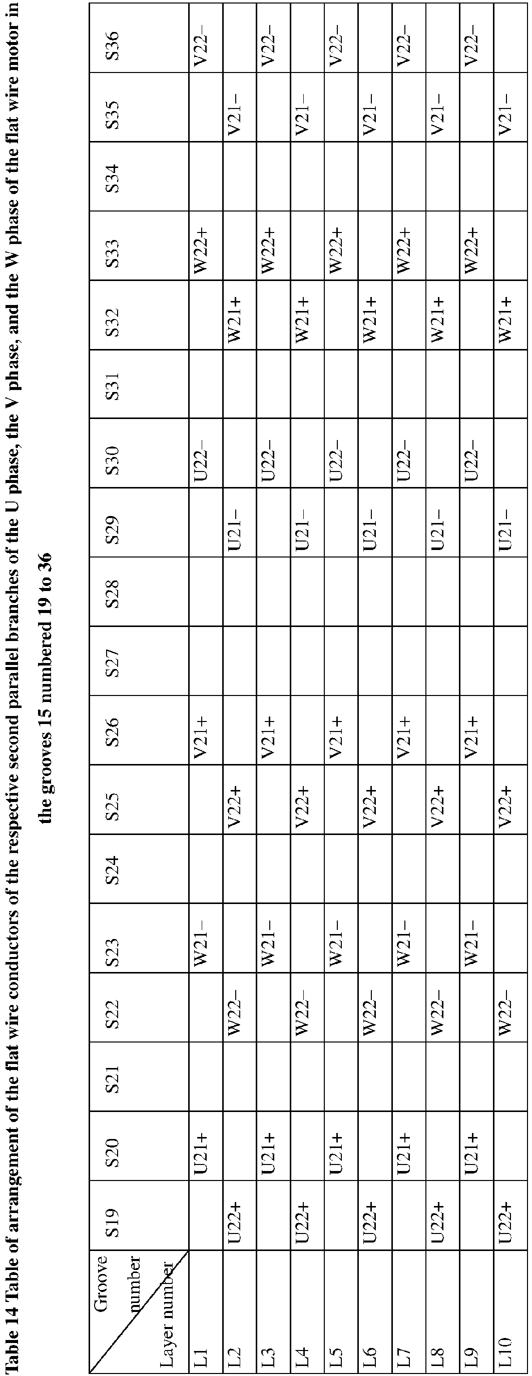

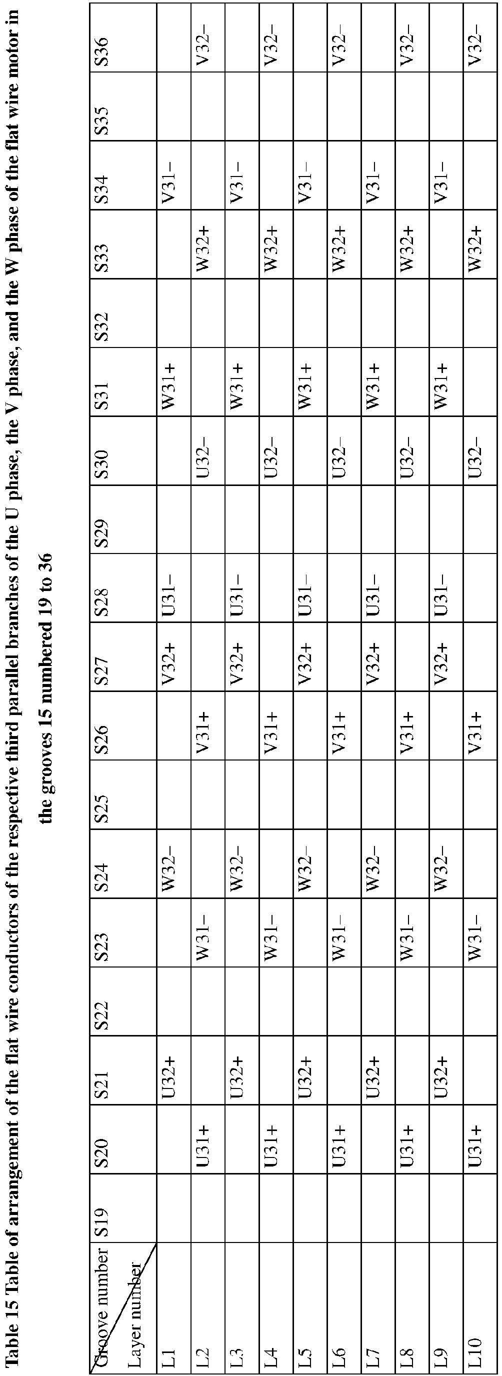

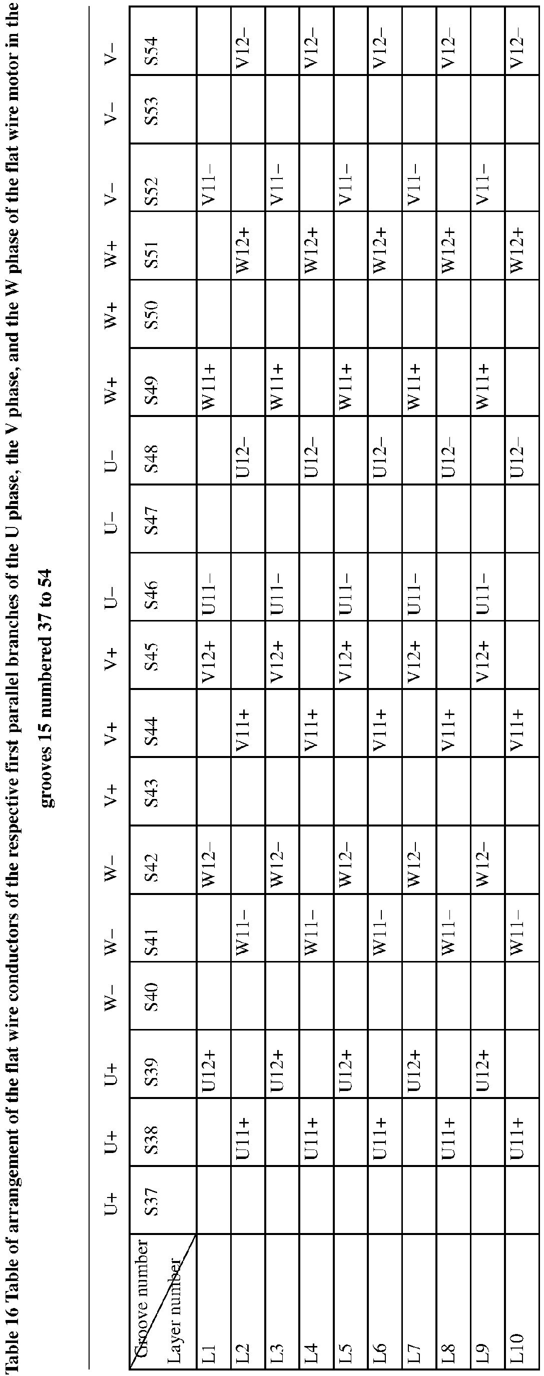

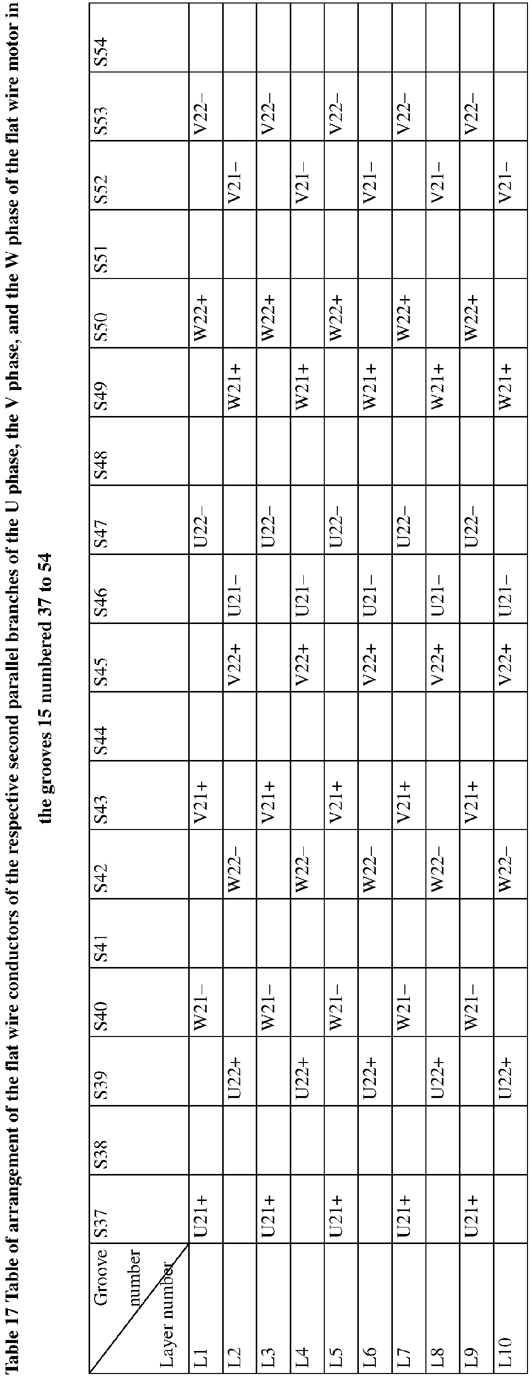

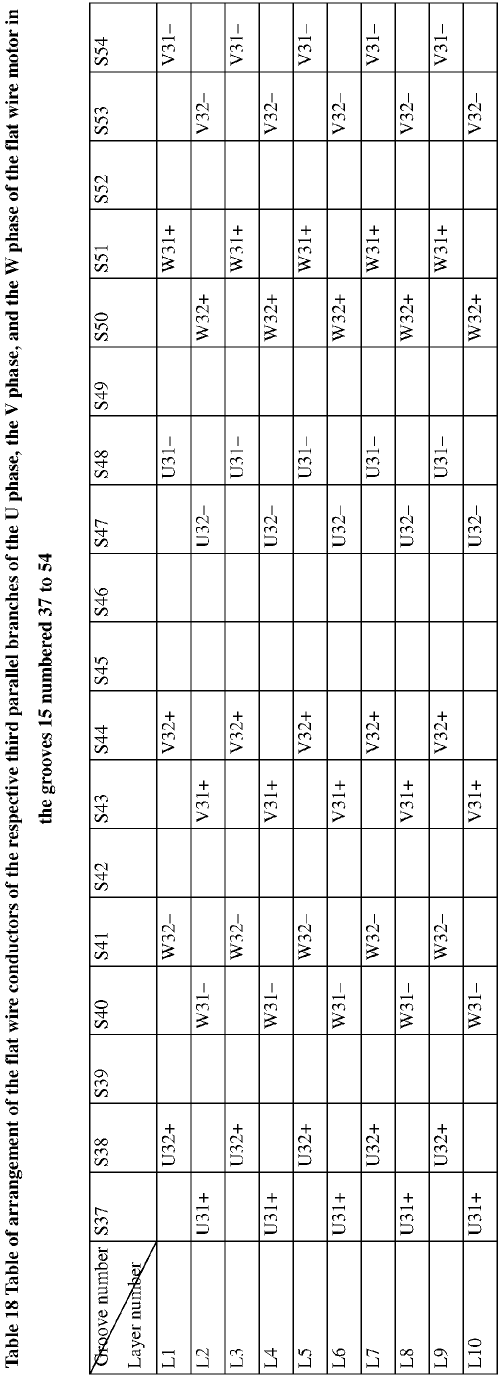

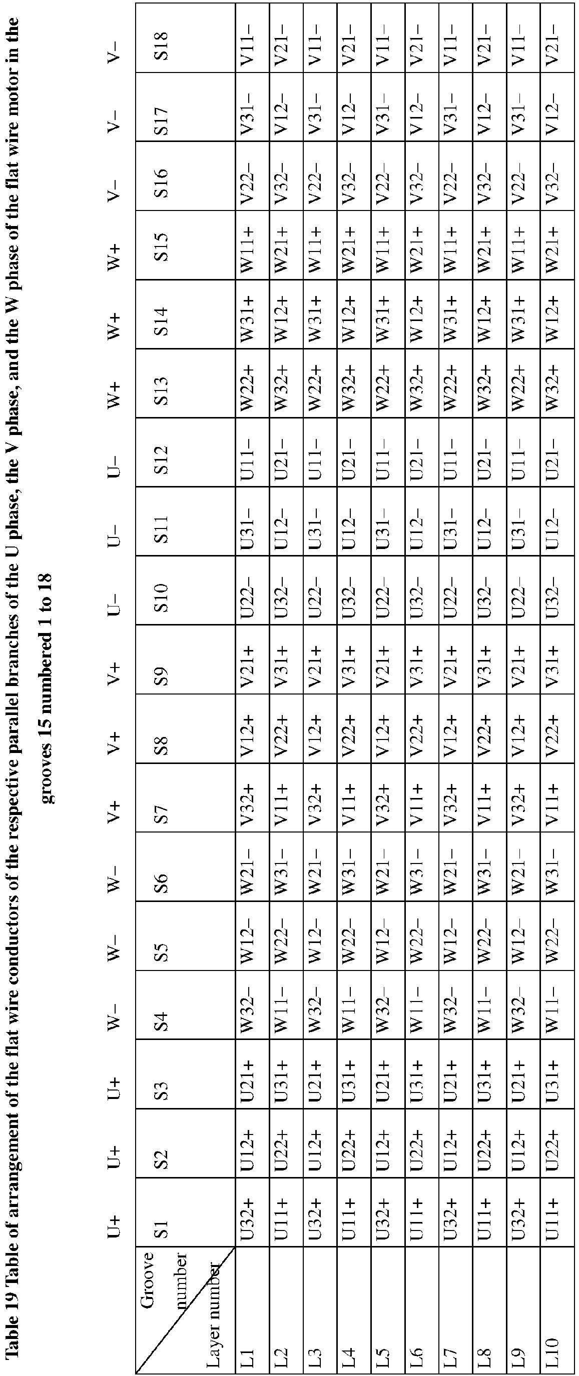

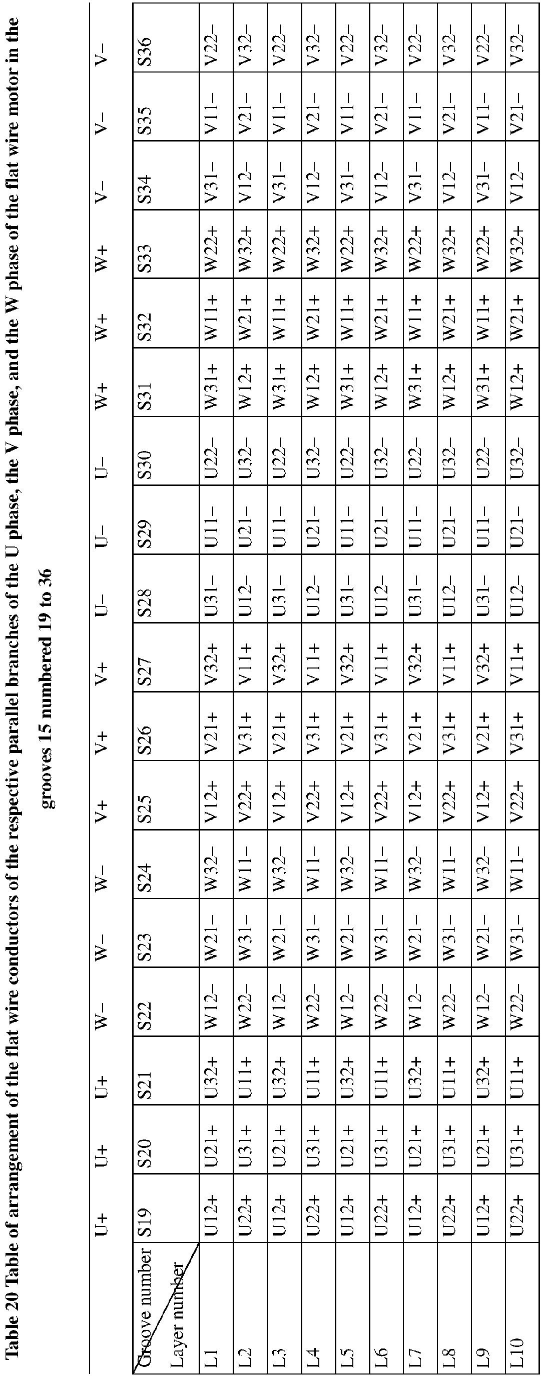

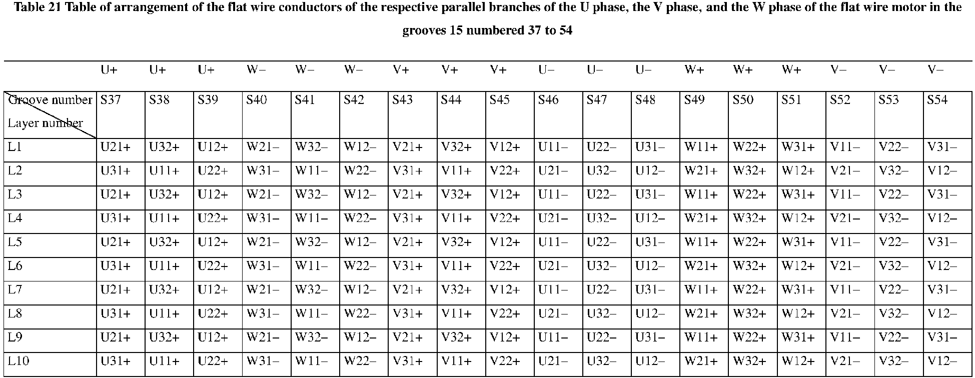

The following Table 22 to Table 30 are tables of arrangement of flat wire conductors of the first parallel branch, the second parallel branch, and the third parallel branch of the U phase winding in the grooves 15 numbered 1 to 54 when the combination of spans of the parallel subbranches of the U phase winding, the V phase winding, and the W phase winding of the flat wire motor on the busbar 13 is 7, 10, 10.

Table 22 to Table 24 are tables of arrangement of flat wire conductors of the first parallel branch, the second parallel branch, and the third parallel branch of the U phase in the grooves 15 numbered 1 to 18. Table 25 to Table 27 are tables of arrangement of flat wire conductors of the first parallel branch, the second parallel branch, and the third parallel branch of the U phase of the flat wire motor in the grooves 15 numbered 19 to 36. Table 28 to Table 30 are tables of arrangement of flat wire conductors of the first parallel branch, the second parallel branch, and the third parallel branch of the U phase of the flat wire motor in the grooves 15 numbered 37 to 54.

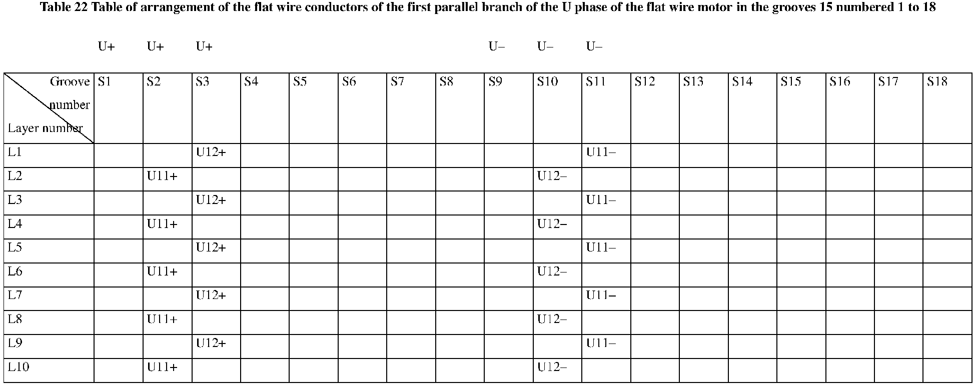

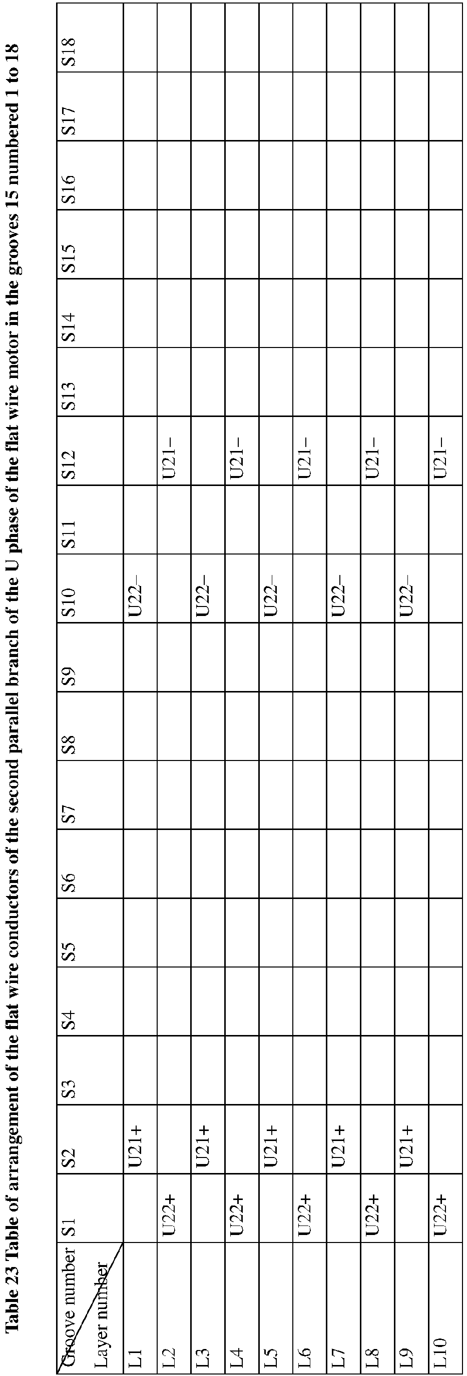

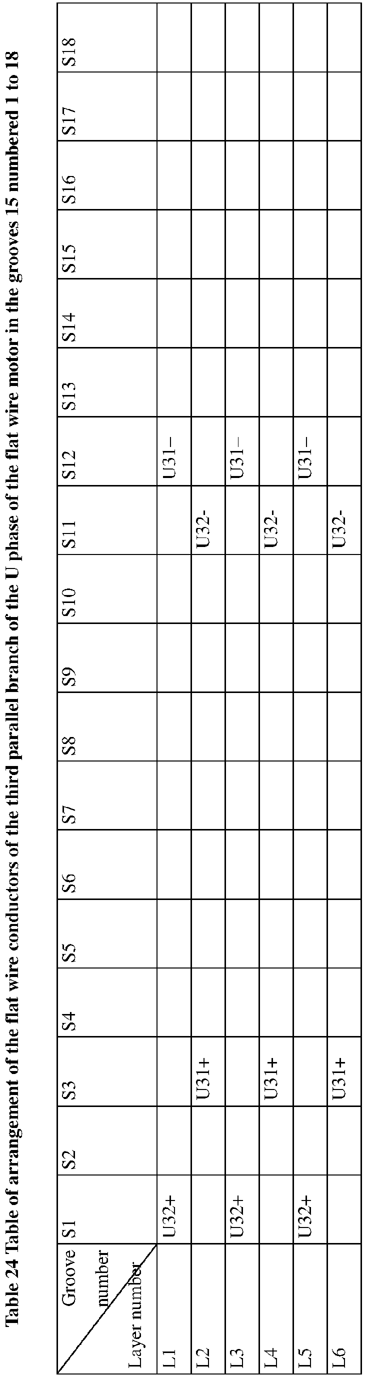

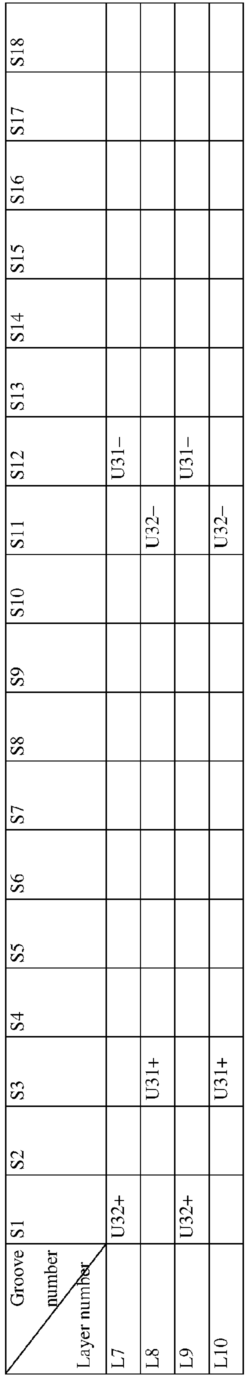

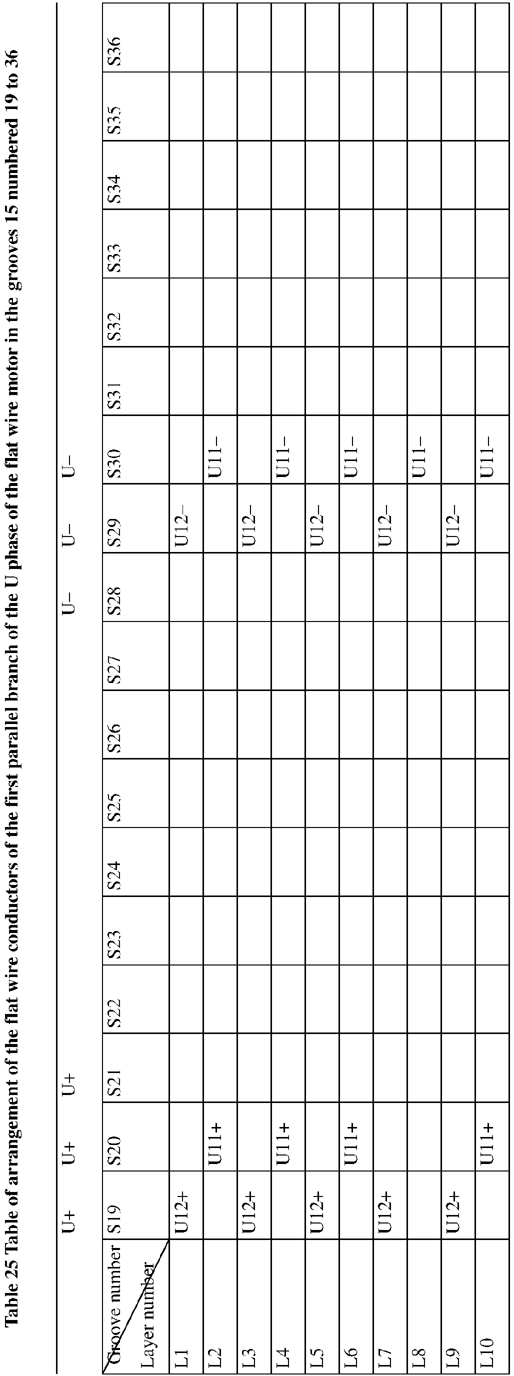

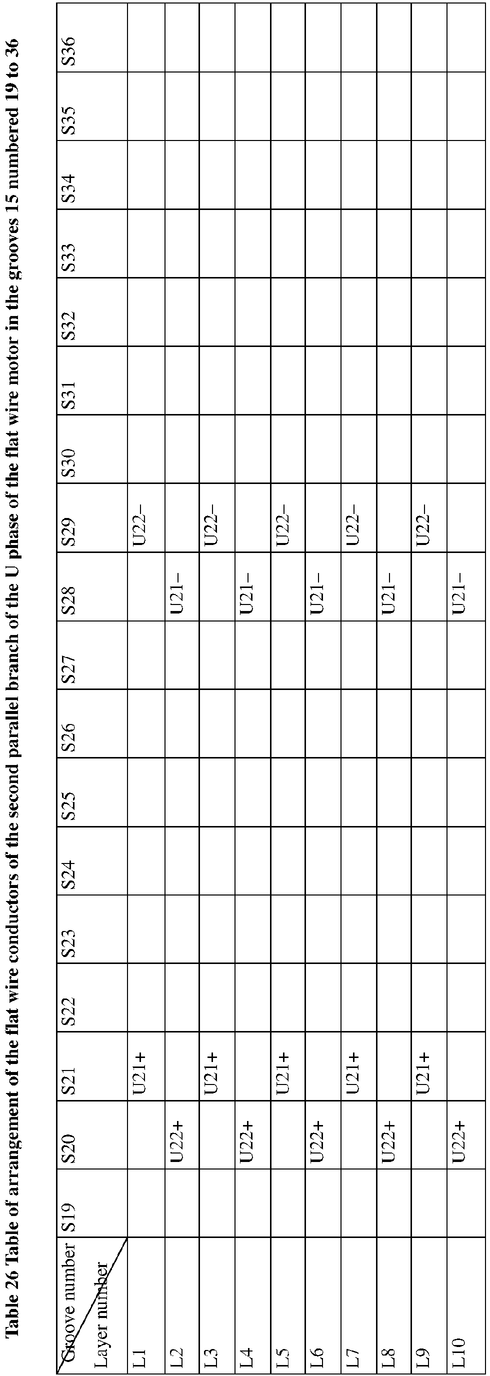

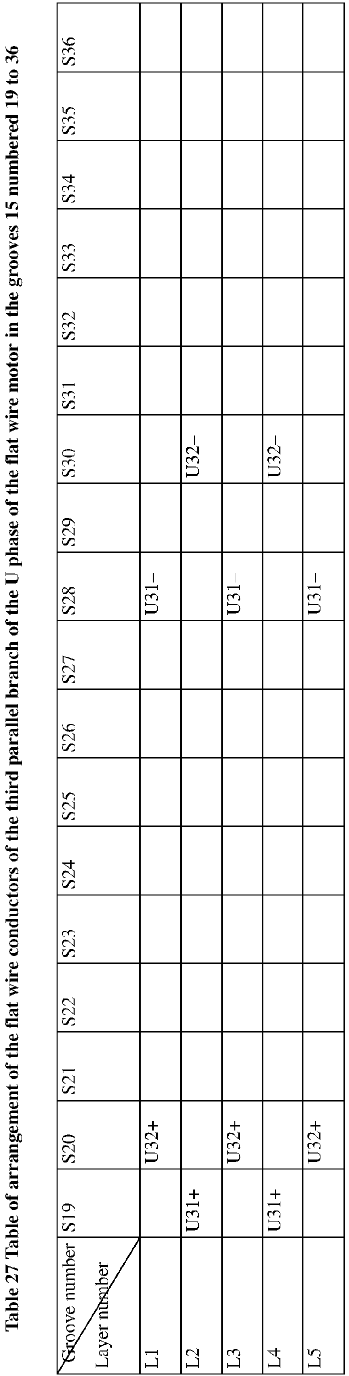

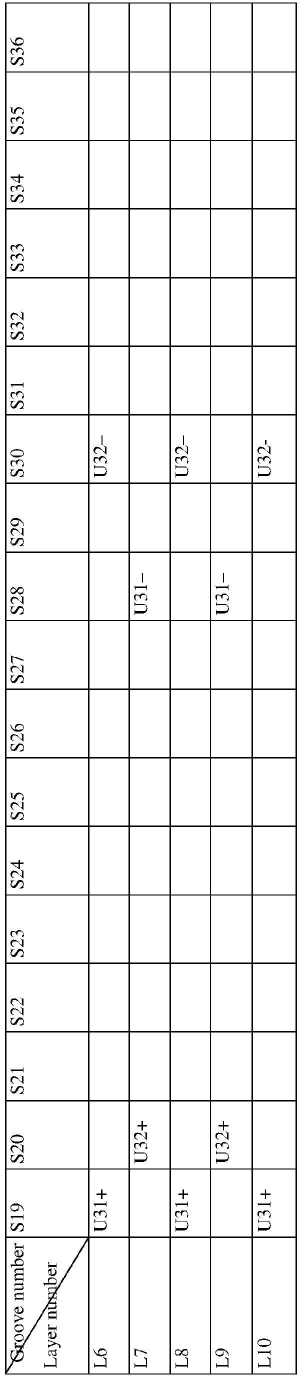

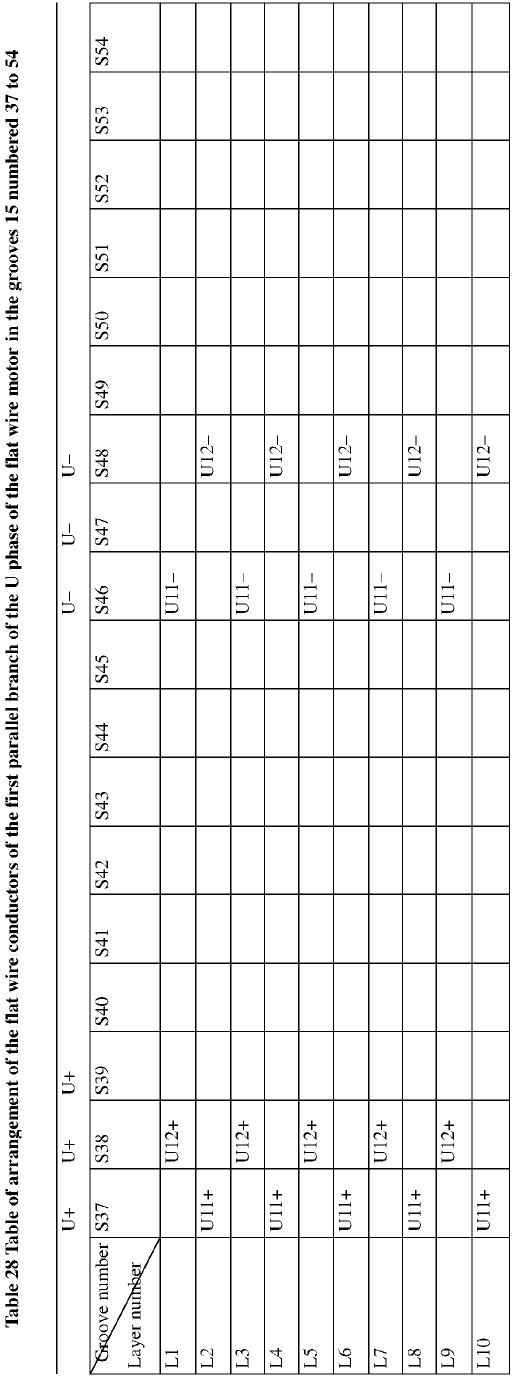

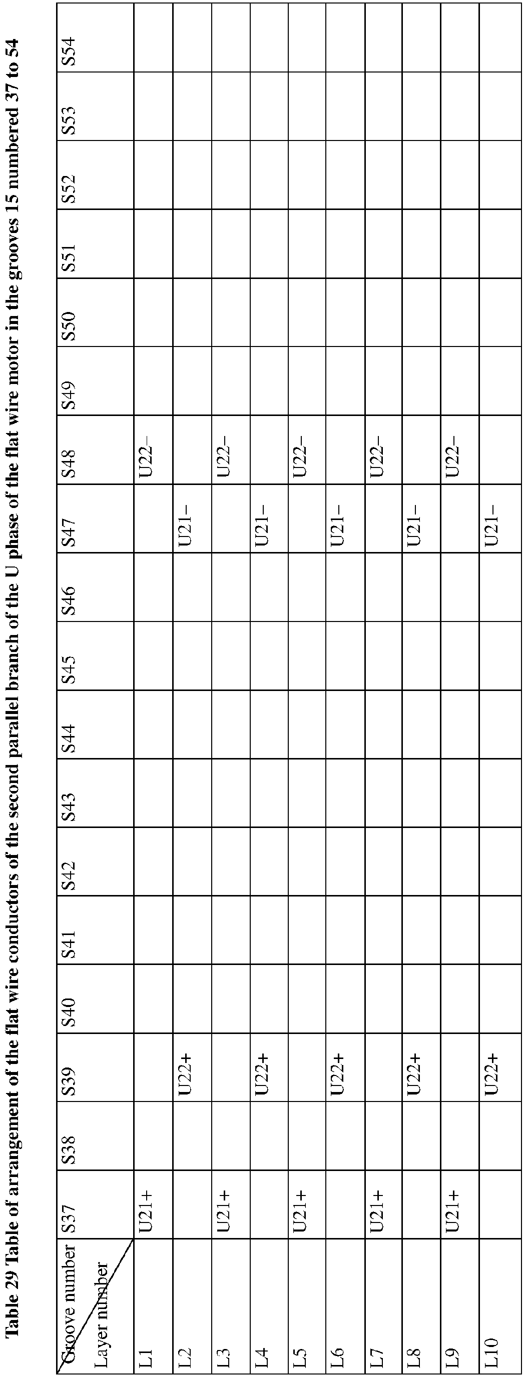

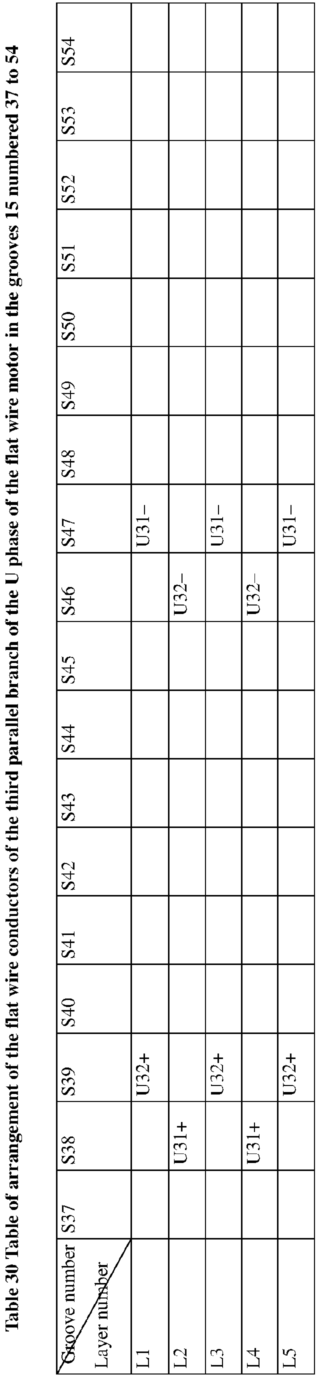

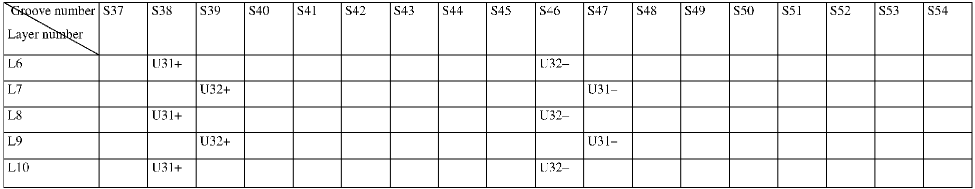

As shown in Table 1 to Table 9 and Table 22 to Table 30, uniform and symmetrical distribution of the parallel subbranches of each parallel branch are reflected as follows: Quantities of Uab+ and Uab- in each parallel branch are the same, and quantities of Uab+ and Uab- in each layer of each parallel branch are also the same. In addition, distribution positions of Uab+ and Uab- in each parallel branch are also symmetrical. This reflects uniform and symmetrical distribution of the parallel subbranches of each parallel branch.

As shown in Table 10 to Table 21, from the overall perspective of the U phase, the V phase, and the W phase of the flat wire motor, quantities of the parallel branches of the phases and quantities of the parallel subbranches of the phases are also identical, and distribution positions are also symmetrical. This reflects uniform and symmetrical distribution of the parallel branches and the parallel subbranches of the U phase, the V phase, and the W phase.

Then, because each parallel branch has flat wire conductors such as Uab+ and Uab- in each of the layers L1 to L10, and the foregoing flat wire conductors are distributed uniformly and symmetrically, potentials of the parallel branches are completely balanced, and potentials of two parallel subbranches in each parallel branch are also balanced. This can avoid generating a cross current between two adjacent parallel branches and two adjacent parallel subbranches, thereby inhibiting or eliminating generation of a cross current of the flat wire motor, alleviating a temperature rise phenomenon of the flat wire motor, and improving working efficiency of the flat wire motor. Quantities of the parallel branches of the flat wire motor provided in this embodiment in the U phase, the V phase, and the W phase are all 3. When the groove 15 of the stator iron core 12 has 10 or even 12 layers of flat wire conductors, comprehensive efficiency of the flat wire motor provided in this embodiment can be improved by 0.4% to 0.5% in comparison with that of a flat wire motor with same specifications. In this way, the flat wire motor can evolve toward a development direction of a higher rotating speed and higher power density.

The foregoing are merely examples of the embodiments of this application, and are not intended to limit this application. Any modification, equivalent replacement, improvement, and the like made within the spirit and principles of this application shall fall within the protection scope of this application.

## Claims

1. A flat wire motor, comprising a stator and a rotor, wherein the stator comprises a stator winding and a stator iron core;
the stator winding comprises a first phase winding, a second phase winding, and a third phase winding, each phase winding comprises at least one parallel branch, the parallel branches are arranged uniformly and symmetrically, and each parallel branch comprises at least two parallel subbranches arranged uniformly and symmetrically;
a plurality of grooves are provided in an inner wall of the stator iron core, the plurality of grooves are arranged around an axial direction of a central axis of the stator iron core and extend along the axial direction of the central axis, and flat wire conductors of the parallel subbranches are stacked in the grooves; and
the rotor is disposed in a space enclosed by the inner wall of the stator iron core.

2. The flat wire motor according to claim 1, wherein wire-in directions of two adjacent parallel subbranches of a same parallel branch are opposite.

3. The flat wire motor according to claim 1, wherein the flat wire conductors of the parallel subbranches of a same phase winding are stacked in a same groove.

4. The flat wire motor according to claim 1, wherein two adjacent layers of flat wire conductors of the parallel subbranches in a same groove closely attach to each other.

5. The flat wire motor according to claim 1, wherein a busbar and a welding end are respectively provided on two opposite sides of the stator winding along the central axis of the stator iron core, and the busbar is a non-welding end.

6. The flat wire motor according to claim 5, wherein a combination of spans of the parallel subbranches of the first phase winding, the parallel subbranches of the second phase winding, and the parallel subbranches of the third phase winding on the busbar is A, B, B; or
a combination of spans of the parallel subbranches of the first phase winding, the parallel subbranches of the second phase winding, and the parallel subbranches of the third phase winding on the busbar is A, A, B; or
a combination of spans of the parallel subbranches of the first phase winding, the parallel subbranches of the second phase winding, and the parallel subbranches of the third phase winding on the busbar is A, B, A.

7. The flat wire motor according to claim 6, wherein the combination of spans of the parallel subbranches of the first phase winding, the parallel subbranches of the second phase winding, and the parallel subbranches of the third phase winding on the busbar is 7, 10, 10.

8. The flat wire motor according to claim 6, wherein the combination of spans of the parallel subbranches of the first phase winding, the parallel subbranches of the second phase winding, and the parallel subbranches of the third phase winding on the busbar is 8, 8, 11.

9. The flat wire motor according to claim 5, wherein spans of the parallel subbranches of the first phase winding, the parallel subbranches of the second phase winding, and the parallel subbranches of the third phase winding at the welding end are the same.

10. The flat wire motor according to claim 9, wherein the spans of the parallel subbranches of the first phase winding, the parallel subbranches of the second phase winding, and the parallel subbranches of the third phase winding at the welding end are all 9.

11. The flat wire motor according to any one of claims 5 to 10, wherein bending directions and bending angles of wire twistings formed by the parallel subbranches of the first phase winding, the parallel subbranches of the second phase winding, and the parallel subbranches of the third phase winding at the welding end are the same.

12. A power assembly, comprising a reducing gear, wherein the power assembly further comprises the flat wire motor according to any one of claims 1 to 11, and the flat wire motor is in transmission connection to the reducing gear.

13. A vehicle, wherein the vehicle comprises the power assembly according to claim 12.
